# EUROPEAN PATENT SPECIFICATION

(11) **EP 2 644 413 B1**
(45) Date of publication and mention of the grant of the patent: **31.05.2017**
(21) Application number: 11793847.2
(22) Date of filing: 07.10.2011
(51) Int. Cl.: B60C 27/14

(54) **PROCEDURE FOR THE INSTALLATION OF ANTI-SKID MEANS ON THE TYRE OF A VEHICLE, DEVICE FOR THE INSTALLATION**
METHODE ZUR INSTALLATION VON GLEITSCHUTZEINRICHTUNGEN AUF EIN FAHRZEUGREIFEN , VORRICHTUNG ZUR INSTALLATION
PROCEDE POUR INSTALLER UN DISPOSITIF ANTI-DERAPANTE SUR UN PNEU DE VEHICULE, DISPOSITIF POUR CE PROCEDE

(30) Priority: 26.11.2010 ES 201031744 P
(43) Date of publication of application: 02.10.2013
(73) Proprietor: Gómez Gámez, Maria Victoria, 25700 La Seu D'Urgell (ES); Soto Rodríguez, José Alfredo, 32500 O Carballiño (ES); Crespo Rodríguez, Manuel, 32500 O Carballiño (ES); Foix Robert, Manuel, 25700 La Seu D'Urgell (ES)
(72) Inventor: FOIX ROBERT, Manuel, E-25700 La Seu D'urgell (ES)
(74) Representative: Manresa Val, Manuel
(86) International application number: PCT/ES2011/070701
(87) International publication number: WO 2012/069678

(56) References cited:
- DE-A1- 2 652 996
- DE-A1-102006 035 192
- DE-U1- 20 003 305
- FR-A1- 2 437 307
- FR-A1- 2 915 133
- US-A1- 2002 066 508

## Description

Procedure for the installation of snow or ice gripping means on the tyre of a vehicle, device for the installation and gripping means, of the type characterised in that it comprises a container fixed to the vehicle, which comprises gripping means, with the means to unroll the cited gripping means on the vehicle tyre, at least one pressure roller and at least two lateral pressure heads, with the cited means for unrolling comprising at least one positioning roller, all located on a tyre and because it comprises the following phases: in a first phase the gripping means, the pressure roller and the first lateral pressure head are positioned over the tyre, in a second phase the vehicle is started and slowly moved and unrolls the gripping means from the positioning roller until the end is reached, overlapping part of the same gripping means, in a third phase the second lateral pressure head is installed to fix the gripping means to the tyre and, in a fourth phase, the positioning roller returns to the initial position.

### BACKGROUND TO THE INVENTION

Various patents are known in the state of the art that describe systems for securing chains, both metal and textile.

Thus Spanish patent No 200102228 (ES2191540) is known, in the name of Mr Danial Lagunas Acero et al, from 2001, which refers to an automatic snow chain fitting and recovery apparatus for automobiles, which comprises a prismatic box mounted on each longer side of the chassis. The box contains the chains, which are extracted and are mounted between two parallel carriages driven by two translation and aperture motors and is attached by the ends to fixing elements on the wheel rim.

European patent No 1165329 is also known to the state of the art, from the Norwegian company AUTOSOCK AS, from 2000, which refers to a device for installation on a vehicle wheel of a predetermined size in order to increase the friction between the wheel and the highway surface under winter conditions, which comprises a band, substantially manufactured from textile material and designed to wrap around the wheel rolling band and which is held in position by means of flexible internal and external lateral parts, which, at least on the inside of the wheel, are tightened by an elastic member that is characterised in that the band is for wrapping around the rolling band with a separation that results from the internal band circumference being at least 4% greater than the greater circumference of the wheel rolling band.

Korean patent No KR20010070555 from 2001 is also known, in the name of KIM KI NAM, which refers to a device that comprises an energy generator, a power transmitter, a chain element and a shock absorber. The energy generator generates power using the rotational power from a drive wheel. The power transmitter flattens any pleats in the chain element using power from the energy generator. The chain element is adhered to the tyre area or surface. The shock absorber connects a chain pad to the chassis of vehicle frame and absorbs the hock applied by the drive wheel vertical movement.

German patent No DE2652996, in the name of Mr Karl FOERSTER, from 1976 that refers to an automatic system for an installation on the covering of a vehicle tyre (in the form of a flexible band) that grips the snow, which comprises a device with rollers for unrolling said gripping means on said tyre and a pressure/positioning roller, with said device fixed on the vehicle and located at one side of the tyre and comprising a series of stages for fixing said gripping means: in a first stage, the device is fitted against the tyre, in a second stage, the vehicle is started at slow speed and the gripping means is unrolled, with said pressure/positioning roller fitted against said tyre and a third stage in which the device returns to its initial position.

Another German Patent No DE20003305 is known in the field of the anti-skid devices in the name of Klaus STROTTER. This document refers to the automatic self-installed gripping means (chain) for snow and ice over the tyre of a vehicle. The chain is stored in the container prior its use, such container is fixed to a vehicle. The gripping means are unrolled when it is necessary. Also the chain is guided during its installation by guide plate pressing onto the rolling surface.

Also German Patent No DE102006035192 in the name of Bayerische Motoren Werke AG describes a device for increasing the coefficient of friction between a vehicle tyre and a road. Such device comprises a flexible elastic element which is fixed to the tyre by means of protuberances that fit into tyre threads.

Lastly, British patent No GB2135252 is known, in the name of Mr Reginald Charles Linwood Ellis, from 1984, which refers to the means to improve the gripping of a vehicle tyre to the ground, particularly under adverse conditions with snow, ice, mud and similar. This is basically achieved using a flexible, elastic element that fixes the respective tyre coverings by protuberances on the inner face that fit into the tread of the cover and, on the outer face by elements that grip the snow or similar.

### BRIEF DESCRIPTION OF THE INVENTION

This application belongs to the car snow-chain sector, the installation of which does not require any human intervention.

The closest prior art document is Spanish patent No 200102228. This document describes a system for fitting chains without having to leave the vehicle.

Said system requires the chains to be mounted on motor-driven carriages with guides.

This system has certain drawbacks. The first is the car space required for its installation because it needs carriages with guides and that the chains be stretched out.

Another is the noise. As the chains are driven by the motors required for their installation they can produce a great deal of noise that is very unpleasant for the people inside the vehicle.

Finally, it is also difficult to install in vehicles after leaving the factory.

The inventor has developed a new procedure and new device that fits the chains without having to leave the car.

Because of its small size, it can also be easily installed in cars without a factory installation.

Finally, the installation has no drawbacks due to noise, especially because it does not employ a metal chain as gripping means, instead it uses flexible means that minimises noise and, at the same time, allows it to be rolled up inside a special container.

A goal of this invention is a procedure for installing snow or ice gripping means on a vehicle tyre, of the type characterised in that it comprises a container fixed to the vehicle, which comprises gripping means, with the means to unroll the cited gripping means on the vehicle tyre, at least one pressure roller and at least two lateral pressure heads, with the cited unrolling means comprising at least one positioning roller and all located on a tyre and because it comprises the following phases: in a first phase the gripping means, the pressure roller and the first lateral pressure head are positioned over the tyre, in a second phase the vehicle is started and slowly moved and unrolls the gripping means from the positioning roller until the end is reached, overlapping part of the same gripping means, in a third phase the second lateral pressure head is installed to fix the gripping means to the tyre and, in a fourth phase, the positioning roller returns to the initial position.

An additional goal of the invention is a device for installing on a vehicle tyre comprising snow or ice gripping means with the previous procedure, characterised in that it comprises a container fixed to the vehicle, which comprises gripping means, with the means for unrolling the cited gripping means over the vehicle tyre, at least one pressure roller and at least two lateral pressure heads, with the cited unrolling means comprising at least one positioning roller, all of which are on top of the tyre.

An additional goal of the invention is a device for installing on a vehicle tyre comprising snow or ice gripping means with the previous procedure, characterised in that gripping means comprise a flexible elastic element that is fixed to tyre by protuberances that fit into tyre tread and its exterior face comprises gripping elements for snow or ice.

### BRIEF DESCRIPTION OF THE DRAWINGS

In order to facilitate the description, this report is accompanied by eight sheets of drawings which illustrate a practical embodiment thereof, provided as a non-limiting example of the scope of this invention:
- Figure 1 is a schematic elevation view of the objective of this invention,
- Figure 2 provides details of the gripping means development,
- Figure 3 is a left lateral view of the objective of this invention,
- Figure 4 is an upper left lateral view,
- Figure 5 is a view of the extended gripping means with the inflation means,
- Figure 6 is a sectioned view of the lower part of the wheel,
- Figure 7 is a view of a moment prior to commencing the first phase of the procedure,
- Figure 8 is a view of the first phase,
- Figure 9 is a view of the second phase,
- Figure 10 is a view of the third phase,
- Figure 11 shows three views (a to c) between the second phase of Fig 9 and the third phase in Fig 10,
- Figure 12 is a view of the fourth phase,
- Figure 13 is a view with the gripping means connected to the positioning roller,
- Figure 14 shows details of the lateral pressure heads fixed to the gripping means,
- Figure 15 illustrates the initial moment of the collection or fifth phase,
- Figure 16 is an embodiment with cleaning means or air dispensers,
- Figure 17 shows the gripping means before and after installation and
- Figure 18 illustrates details of gripping means rewinding.

### SPECIFIC EMBODIMENT EXAMPLE OF THIS INVENTION

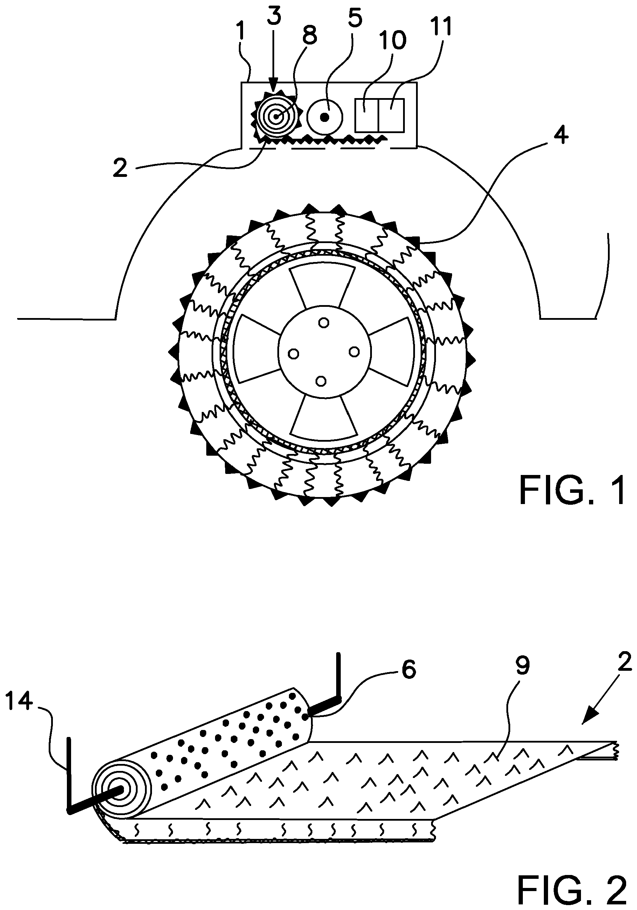

Figure 1 illustrates container 1 with gripping means 2, unwinding means 3, with its positioning roller 8, pressure roller 5, first lateral pressure head 10, second lateral pressure head 11 and tyre 4.

Figure 2 shows gripping means 2, with its protuberances 6 and gripping elements 9 and means 14 for moving towards the tyre.

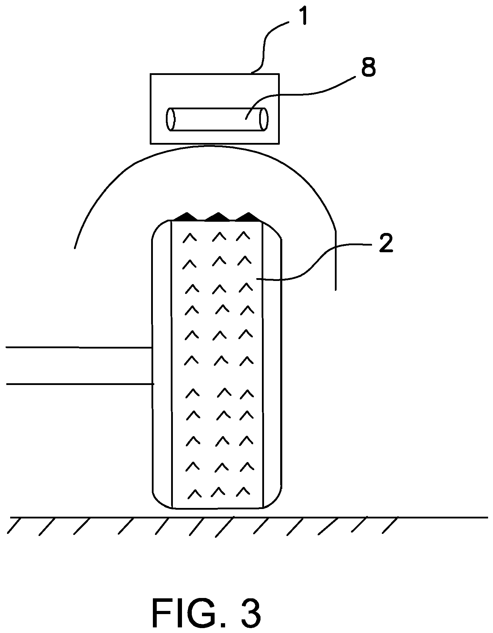

Figure 3 illustrates container 1, positioning roller 8 and gripping means 2.

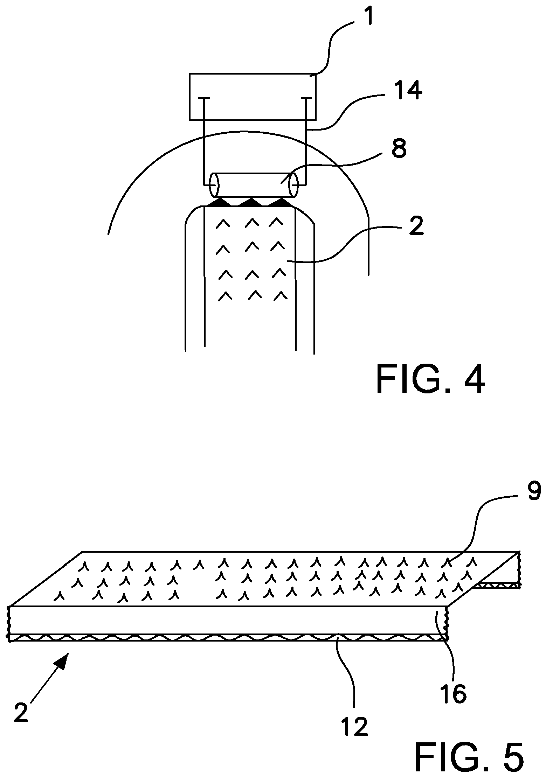

Figure 4 is a drawing of container 1, means 14 for moving towards the tyre, positioning roller 8 and gripping means 2.

Figure 5 illustrates gripping means 2, lateral inflation means 12, optional skirt 16 and gripping elements 9.

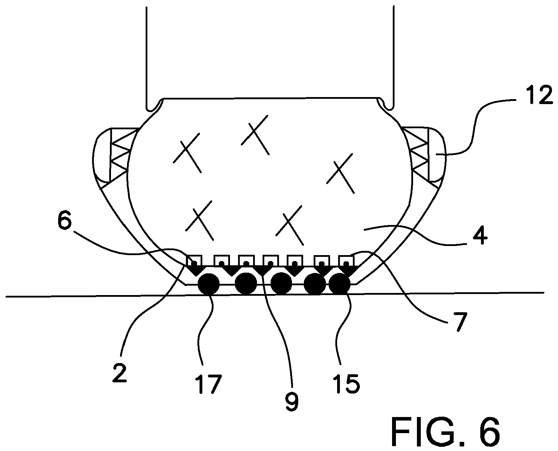

Figure 6 represents road surface 15, tyre 4 with its tread 7, gripping means 2, gripping elements 9, gripping means protuberances 6 and lateral pressure head 12.

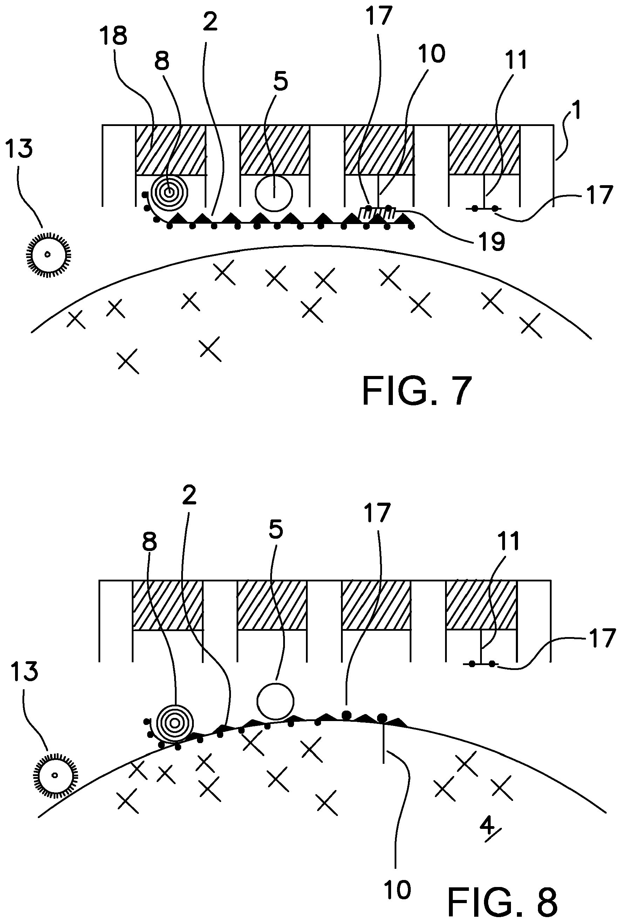

Figure 7 shows container 1, positioning roller 8, pressure roller 5, first lateral pressure head 10, second lateral pressure head 11, pressure head protuberances 17, fixing zone 19 for head 10, activation means 18, tyre 4 and brush 13, all deactivated.

Figure 8 illustrates gripping means 2, positioning roller 8, pressure roller 5, first lateral pressure head 10, all of which are activated, the second lateral pressure head 11, that is not activated, head protuberances 17, and brush 13 activated and tyre 4.

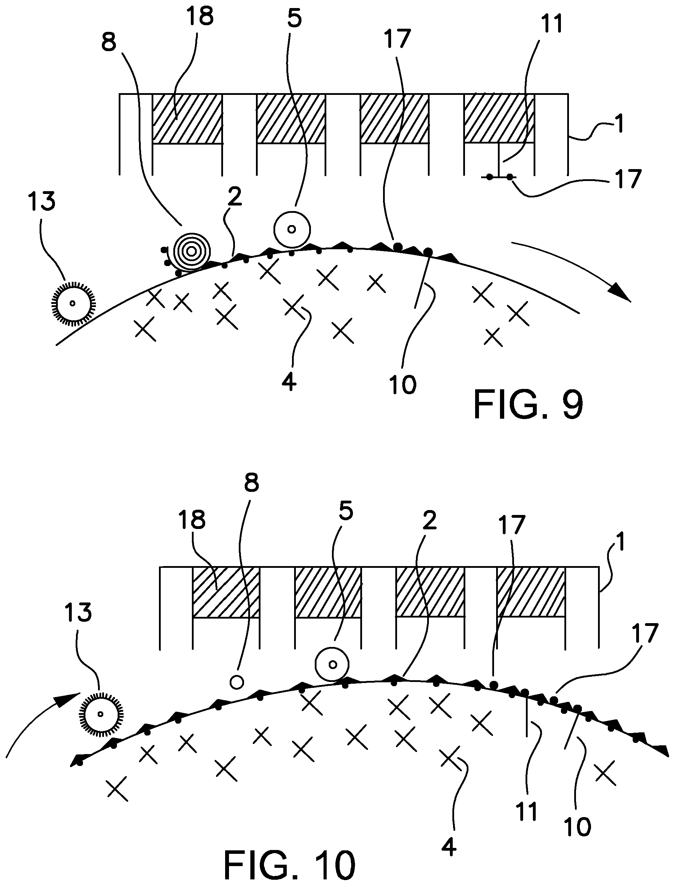

Figure 9 is a drawing of gripping means 2, container 1, activation mechanism 18, activated positioning roller 8, activated pressure roller 5, activated first lateral pressure head 10, non-activated second lateral pressure head 11, pressure head protuberances 17, brush 13 and tyre 4.

Figure 10 represents gripping means 2, container 1, activation mechanism 18, positioning roller without the now unrolled gripping means 8, pressure roller 5, first lateral pressure head 10, second lateral pressure head 11, brush 13, all activated and tyre 4.

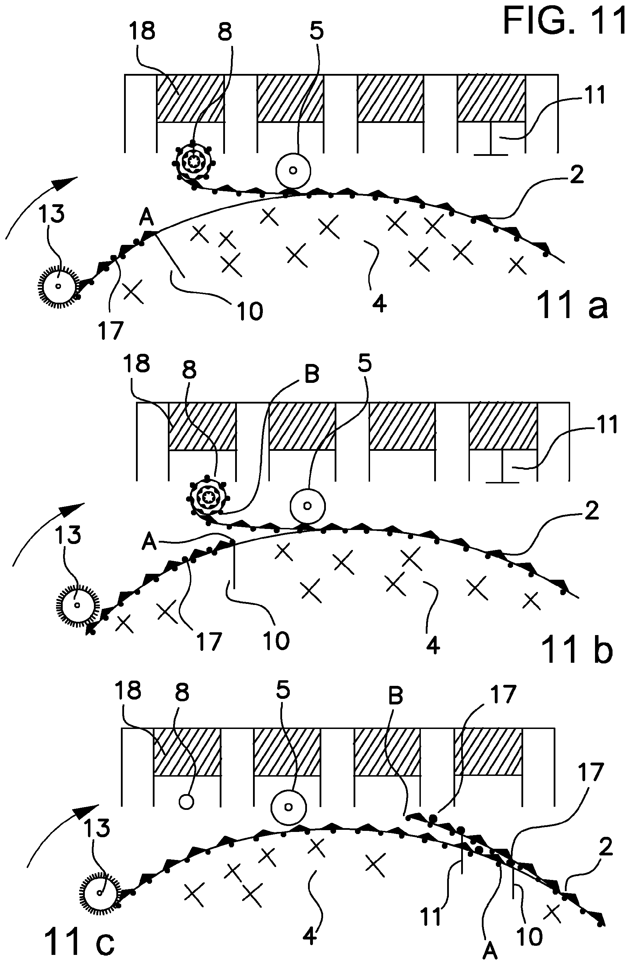

Figure 11 (a to c) show gripping means beginning and end points "A" and "B" and three instants 11 a, 11 b and 11 c prior to phase 3 of Figure 10. Thus, the three figures, 11 a to 11c show gripping means 2, activation mechanism 18, positioning roller 8, pressure roller 5, first lateral pressure head 10, lateral pressure head protuberances 17 second lateral pressure head 11, brush 13 and tyre 4.

Figure 11a represents the beginning of gripping means point "A" and a section of the final development of positioning roller 8.

Figure 11b shows the moment prior to activation of head 11, in which end part point "B" is positioned over the beginning part "A" of the gripping means.

Figure 11c represents moments before the instant when the end part of gripping means point "B" is positioned over the beginning of gripping means point "A" when second pressure head 11 is activated as illustrated in Figure 10.

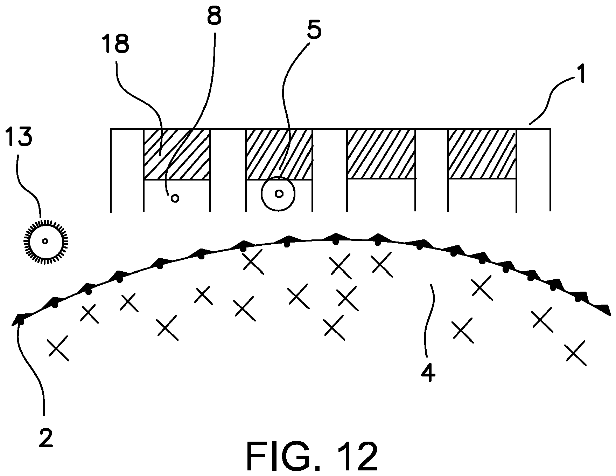

Figure 12 is a drawing of gripping means 2, container 1, positioning roller 8 without the gripping element, activation means 18, pressure roller 5, brush 13 and tyre 4.

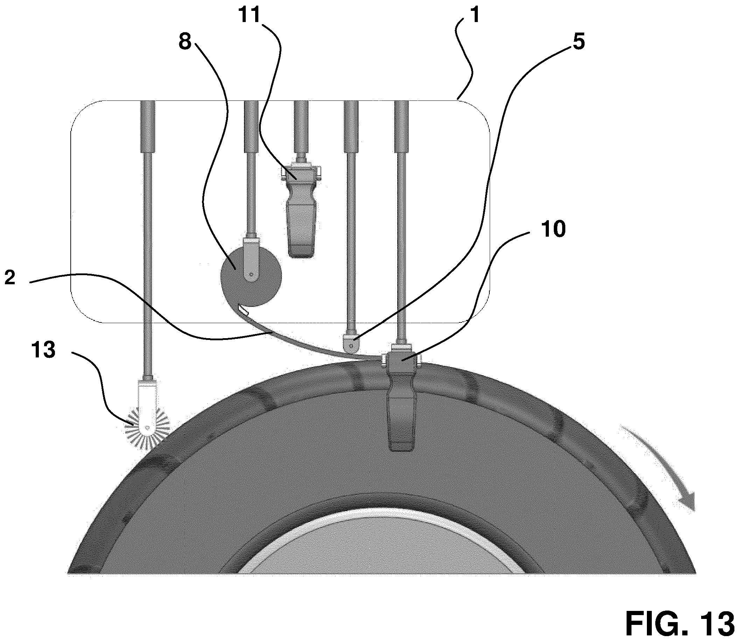

Figure 13 illustrates container 1, gripping means 2, brush 13, first lateral pressure head 10, second lateral pressure head 11, pressure roller 5 and positioning roller 8.

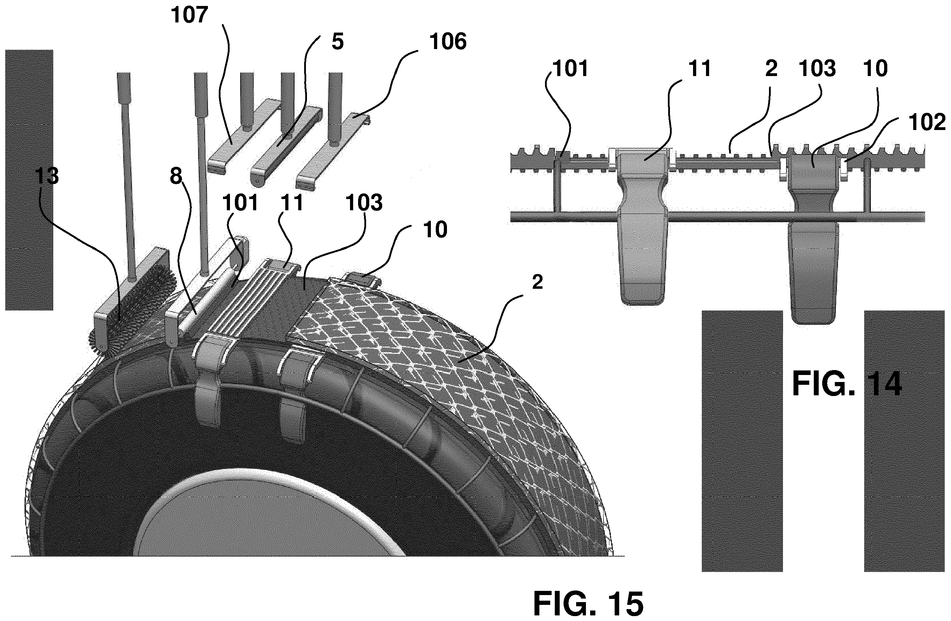

Figure 14 shows gripping means 2, cavities 102, 103, a hook-up zone or element 101, first lateral pressure head 10 and second lateral pressure head 11.

Figure 15 represents gripping means 2, brush 13, first lateral pressure head 10 and second lateral pressure head 11, pressure roller 5, positioning roller 8, cavity 103, hook-up zone or element 101 and means 106, 107 for lateral pressure head recovery.

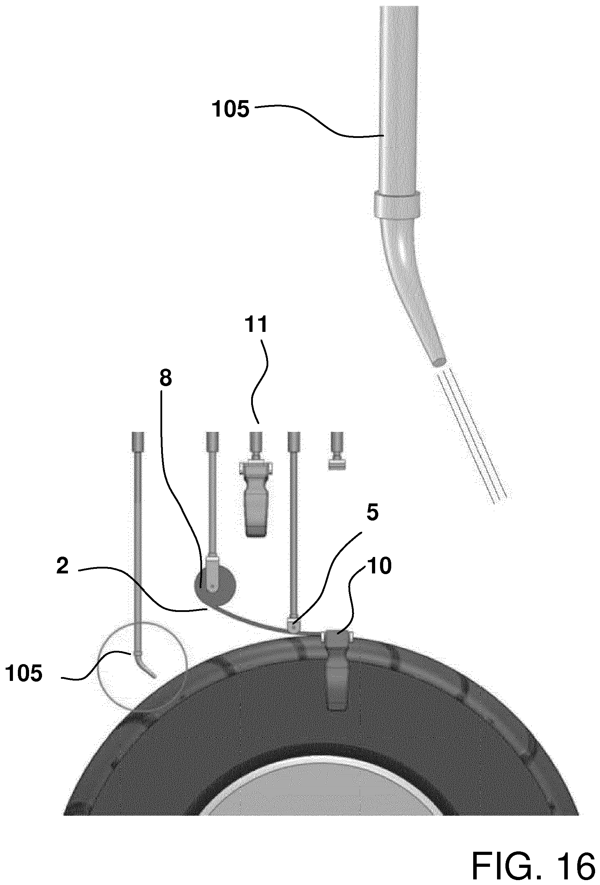

Figure 16 is a drawing of gripping means 2, air dispenser 105, first lateral pressure head 10, second lateral pressure head 11, pressure roller 5 and positioning roller 8.

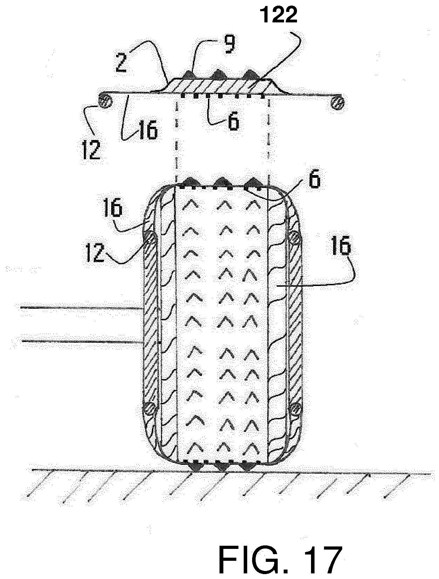

Figure 17 illustrates gripping means 2, protuberances 6, chamber 122, gripping elements 9, inflation means 12 and skirt 16.

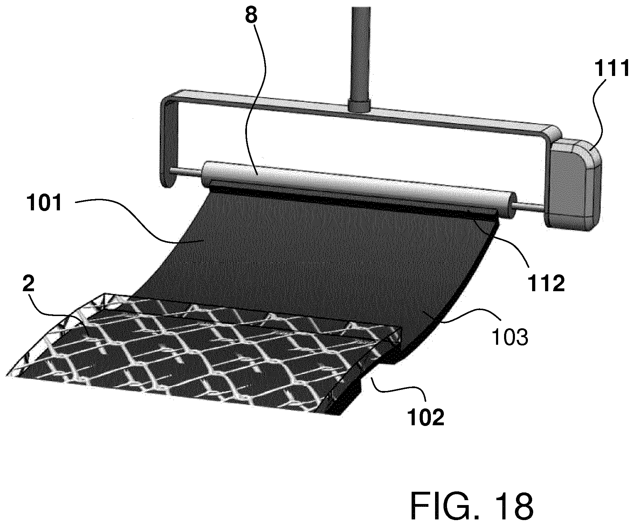

Lastly, Figure 18 illustrates gripping means 2, hook-up zone 101, cavities 102, 103, a detection element or billet in the hook-up zone 112, positioning roller 8 and motor 111.

It essentially consists of a container 1, comprising mentioned gripping means 2, rolled-up, with means 3 to unroll cited gripping means 2, over tyre 4, which is described below.

Said gripping means 2 is located on positioning roller 8. The referred positioning roller 8 is next to pressure roller 5. Part of the gripping means 2 is located under the mentioned pressure means 5 and under fist lateral pressure head 10.

Container 1 also has two lateral pressure heads 10, 11, one acting as at the beginning of unrolling and the other at the end.

Thus, when executing gripping means 2 installation operation on tyre 4, positioning roller 8 is located over tyre 4 in the same way as pressure roller 5 and first lateral pressure head 10. Said first lateral pressure head 10 secures the gripping means 2 to the tyre 4.

Then the vehicle is slowly moved forward and gripping means 2 is unrolled until it comes to its end and part of the same gripping means 2 is superimposed, with second lateral pressure head 11 being lowered to secure the gripping means 2 and prevent cited gripping means 2 from being able to move on tyre 4.

Subsequently, positioning roller 8 and pressure roller 5 recover their initial positions and the vehicle is ready to circulate over snow or ice.

Gripping means 2 is a flexible elastic element that is fixed to tyre 4 by protuberances 6 that fit into tyre tread 7. In this way, gripping means 2 is secured to tyre 4 by these protuberances 6 as well as lateral pressure heads 10, 11.

In another embodiment, gripping means 2 may comprise cavities 102, 103 at the beginning and the end of the same for the positioning of first and second lateral heads 10, 11 respectively, with the widths of cavities 102, 103 matching the thicknesses of said lateral heads 10, 11 (Figs 14 and 15). This resolves the "pothole effect" problem, because the lateral heads 10, 11 are hidden in gripping means 2.

Moreover, gripping means 2 on the side that is in contact with the snow or ice is fitted with gripping elements 9 for snow or ice, such as rubber nails etc.

Optionally, gripping means 2 can comprise skirt 16, the perimeters of which comprise either lateral inflation means 12 or an elastic material. This allows that, in addition to the lateral pressure heads 10, 11 (Fig 17), the gripping means 2 have supplementary fixing means and good tensioning of all the gripping means 2 to the wheel, equivalent to the effects produced by the conventional metal hoop used by most wheel chains.

The same gripping means 2 may comprise chamber 122 that would allow said gripping means to inflate and increase efficiency of gripping means 2 adjustment on tyre 4.

The inflation means shall be, for example, a compressor from which a tube is inserted into a valve that would pump or release air in gripping means 2, as required.

Pressure roller 5 has the additional function of aligning gripping means 2 on tyre 4, in other words, it correctly positions gripping means 2 on tyre 4.

The positioning roller 8 has a version with two or more positioning rollers. This case is especially useful for vehicles with large wheels, for example, large-tonnage lorries. Thus, the second positioning roller assists in maintaining gripping means 2 tense prior to installation and, during installation, it helps to correctly position gripping means 2 on tyre 4.

Lateral pressure heads 10, 11 should be located more or less close to the vertical of tyre 4 in order to be as efficient as possible. On occasions, because of space requirements when installing container 1 on the vehicle, pressure heads 10, 11 may not be exactly vertical and so must be positioned as vertical as possible.

Said heads 10, 11 are for lateral pressure and are in the form of clip or staple which, when flattened by pressure from the wheel against the road, the clip or staple arms tend to open so that it is essential that said heads are of lateral pressure or, which is the same, the clip or staple arms apply pressure to the wheel tyre 4, even when the clip or staple is flattened.

In other situations, if the distance between container 1 and tyre 4 is considerable, it can be designed to have movement of container 1 towards tyre 4 so that gripping means 2 do not have to overcome this distance and, in this way, correct positioning of gripping means 2 on tyre 4 is ensured.

In another embodiment, as shown in figs 13 to 16, first lateral pressure head 10 is joined to the initial section of gripping means 2. Thus, first lateral pressure head 10 always guides the positioning of gripping means 2. In this situation, positioning roller 8 may not even be in contact with tyre 4.

Optionally, one or more brushes 13 may also be installed that act on tyre 4 so that when gripping means are installed, brush 13 cleans off snow, ice and mud from tyre tread 7, which will enable correct fitting of gripping means 2 on the tyre 4.

Another way to clean gripping means 2 would be to employ air dispenser tubes 105 to clean tyre 4 (Fig 16).

The device may incorporate a safety circuit (not illustrated), so that if a specific speed is exceeded during gripping means 2 installation, the system is blocked and pressure roller 5 and positioning roller 8 return to their initial positions.

Also optionally, a recovery system for gripping means 2 may be employed after travelling over the road with snow or ice, without the driver having to leave the vehicle.

Thus, just as shown in Figure 15, it could consist of a fifth phase comprising the recovery of gripping means 2.

This is accomplished as follows. Initially, the correct wheel position is detected so that when the hook-up zone is detected, second lateral head 11 is released which partially frees gripping means 2.

Gripping means 2 has a hook-up zone 101 at the end of gripping means 2. Said zone 101 is where it connects to positioning roller 8, in this embodiment said positioning roller 8 joins to a metal or pseudo-metal billet 112 which, when the vehicle reverses, positioning roller 8 rotates driven by motor 111 exclusively for this opposite direction rotation to that of unwinding and thus rolls up gripping means 2 (Fig 18).

Moreover, said recovery means comprise means 106, 107 to recover first and second lateral pressure heads 10, 11 so that said means 106, 107 move down and collect the lateral pressure heads 10, 11 as seen in Figure 15.

The hook-up between zone 101 and positioning roller 8, together with between lateral pressure heads 10, 11 and means 106, 107 may be accomplished by an electromagnet system or by sensors, etc.

This invention patent describes a procedure for the installation of a gripping means on a vehicle tyre for snow or ice, device for installation and gripping means. The examples mentioned here do not limit this invention and it may have various applications and/or adaptations, all of which are within the scope of the following claims.

## Claims

1. Procedure for the installation of snow or ice gripping means on the tyre of a vehicle that comprises a container (1) fixed to the vehicle, said container (1) comprises gripping means (2), with means to unroll (3) said gripping means (2) on vehicle tyre (4), at least one pressure roller (5) **characterised in that** it comprises at least two lateral pressure heads (10, 11), with the cited means for unrolling comprising at least one positioning roller (8), all located above a tyre (4) and because it comprises the following phases
• in a first phase gripping means (2), pressure roller (5) and first lateral pressure head (10) are positioned over the tyre (4),
• in a second phase the vehicle is started and slowly moved forward and unrolls the gripping means (2) from positioning roller (8) until the end is reached, overlapping part of the same gripping means (2),
• in a third phase second lateral pressure head (11) is installed to fix the gripping means (2) to the tyre (4),
• in a fourth phase, positioning roller (8) and pressure roller (5) return to the initial position.

2. Procedure in accordance with claim 1, wherein said gripping means (2) in form of a flexible elastic element with its exterior surface comprising gripping elements (9) for snow or ice are fixed to the tyre by protuberances (6) that fit into the tyre tread (7).

3. Procedure in accordance with claim 2, **characterised in that** the gripping means (2) comprise cavities (102,103) wherein at the beginning and the end of the same for the positioning of first and second lateral heads (10, 11) respectively, the thicknesses of said cavities (102, 103) are matching the thicknesses of said lateral heads (10, 11).

4. Procedure in accordance with claim 2 or 3, **characterised in that** the gripping means (2) comprise means, in the form of skirt (16) and lateral bulk (12).

5. Procedure in accordance with claim 1, 2 or 3 **characterised in that** the first lateral pressure head (10) is joined to the initial section of the gripping means (2).

6. Procedure in accordance with claim 1, **characterised in that** the lateral pressure heads (10, 11) are locating as close as possible to the vertical of the tyre (4).

7. Procedure in accordance with claim 1, **characterised in that**, prior to the first phase, the container (1) moves towards the tyre (4).

8. Procedure in accordance with one or more of the previous claims, **characterised in that** it comprises a fifth phase for the recovery of gripping means (2).

9. Procedure in accordance with claim 1, **characterised in that** said recovery phase comprises the release of the second lateral pressure head (11) and **in that** hook-up element or zone (101) at the end of the gripping means (2) connects to the positioning roller (8) which, when the vehicle reverses, the positioning roller (8) rotates in the opposite direction to unwinding and the gripping means (2) are rolled up.

10. Device for the installation of gripping means for snow or ice over the tyre of a vehicle in accordance with the previous procedure **characterised in that** it comprises container (1) fixed to the vehicle, said a container (1) comprises gripping means (2), with means to unroll (3) said gripping means (2) on the vehicle tyre (4), at least one pressure roller (5) and at least two lateral pressure heads (10, 11), with said means for unrolling comprising at least one positioning roller (8), all located above the tyre (4).

11. Device in accordance with claim 10, **characterised in that** the first lateral pressure head (10) is joined to the initial section of gripping means (2).

12. Device in accordance with claim 10, **characterised in that** the lateral pressure heads (10, 11) are located as close as possible to the tyre (4) vertical.

13. Device in accordance with claim 10, **characterised in that** the container (1) comprise means (14) to move towards the tyre (4).

14. Device in accordance with claim 10, **characterised in that** it comprises at least one cleaning brush (13) for the tyre (4).

15. Device in accordance with claim 10, **characterised in that** it comprises one or more air dispensers (105) for the tyre (4) cleaning.

16. Device in accordance with claim 10, **characterised in that** the container (1) is removable.

17. Device in accordance with claim 10, **characterised in that** it comprises means for the recovery of gripping means (2).

18. Device in accordance with claim 17, **characterised in that** said recovery means comprise means for collecting hook-up element or zone (101), together with means (106, 107) for recovering the first and second lateral pressure heads (10, 11).

19. Device in accordance with claim 10 **characterised in that** gripping means (2) comprise a flexible elastic element that is fixed to the tyre (4) by protuberances (6) that fit into the tyre tread (7) and its exterior surface comprises gripping elements (9) for snow or ice.

20. Device in accordance with claim 19 **characterised in that** said gripping means (2) comprise cavities (102, 03) at the beginning and the end of the same for the positioning of the first and second lateral pressure heads (10, 11) respectively, with the thickness of said cavities (102, 103) matching the thicknesses of said lateral heads (10, 11).

21. Device in accordance with claim 19 **characterised in that** said gripping means (2) comprise means (16) in the form of a skirt and lateral bulk (12).

22. Device in accordance with claim 19 **characterised in that** said gripping means (2) comprise a catch zone (101) at the end of the gripping means (2) when the latter is unrolled.

## Patentansprüche

1. Verfahren zur Montage von schnee- oder eisgreifenden Mitteln am Reifen eines Fahrzeugs, das einen am Reifen angebrachten Behälter (1) aufweist, wobei der Behälter (1) Greifmittel (2) mit Mitteln zum Abrollen (3) der Greifmittel (2) am Fahrzeugreifen (4) sowie mindestens eine Druckrolle (5) aufweist, **dadurch gekennzeichnet, dass** diese mindestens zwei seitliche Druckköpfe (10, 11) aufweisen, wobei die genannten Abrollmittel mindestens eine Positionierrolle (8) aufweisen, die sich alle am Reifen (4) befinden, und das Verfahren die folgenden Stufen aufweist:
• in einer ersten Stufe werden die Greifmittel (2), die Druckrolle (5) sowie der erste seitliche Druckkopf (10) über dem Reifen (4) positioniert,
• in einer zweiten Stufe wird das Fahrzeug gestartet und langsam vorwärts gefahren und rollt dabei die Greifmittel (2) von der Positionierrolle (8) ab, bis das Ende erreicht ist, wobei ein Teil derselben Greifmittel (2) überlappen,
• in einer dritten Stufe wird der zweite seitliche Druckkopf (11) zur Befestigung der Greifmittel (2) am Reifen (4) montiert,
• in einer vierten Stufe kehren die Positionierrolle (8) und die Druckrolle (5) in ihre Ausgangsstellung zurück.

2. Verfahren nach Anspruch 1, wobei die Greifmittel (2) in Form eines flexiblen elastischen Elements, dessen Außenfläche Greifelemente (9) für Schnee oder Eis umfasst, über Vorsprünge (6), die in das Reifenprofil (7) passen, am Reifen befestigt sind.

3. Verfahren nach Anspruch 2, **dadurch gekennzeichnet, dass** die Greifmittel (2) Hohlräume (102, 103) aufweisen, wobei die Dicken dieser Hohlräume (102, 103) am Anfang und Ende derselben zur Positionierung des ersten bzw. zweiten seitlichen Kopfs (10, 11) den Dicken der seitlichen Köpfe (10, 11) entsprechen.

4. Verfahren nach Anspruch 2 oder 3, **dadurch gekennzeichnet, dass** die Greifmittel (2) Mittel in Form einer Umrandung (16) und einer seitlichen Aufblasvorrichtung (12) umfassen.

5. Verfahren nach Anspruch 1, 2 oder 3, **dadurch gekennzeichnet, dass** der erste seitliche Druckkopf (10) mit dem Anfangsabschnitt der Greifmittel (2) verbunden ist.

6. Verfahren nach Anspruch 1, **dadurch gekennzeichnet, dass** sich die seitlichen Druckknöpfe (10, 11) möglichst nahe an der Senkrechten des Reifens (4) befinden.

7. Verfahren nach Anspruch 1, **dadurch gekennzeichnet, dass** sich der Behälter (1) vor der ersten Stufe in Richtung des Reifens (4) bewegt.

8. Verfahren nach einem oder mehreren der vorhergehenden Ansprüche, **dadurch gekennzeichnet, dass** es eine fünfte Stufe für die Rückstellung der Greifmittel (2) aufweist.

9. Verfahren nach Anspruch 1, **dadurch gekennzeichnet, dass** die Rückstellungsstufe die Freigabe des zweiten seitlichen Druckkopfes (11) und dass das Einhakelement bzw. der Abschnitt (101) am Ende der Greifmittel (2) mit der Positionierrolle (8) verbunden ist, die sich bei Umkehrung des Fahrzeugs in umgekehrter Richtung zum Abrollen dreht und dadurch die Greifmittel (2) aufgerollt werden.

10. Einrichtung zur Montage von Greifmitteln für Schnee oder Eis über den Reifen eines Fahrzeugs gemäß des oben angegebenen Verfahrens, **dadurch gekennzeichnet, dass** sie einen am Fahrzeug befestigten Behälter (1) aufweist, wobei der Behälter (1) Greifmittel (2) mit Mitteln zum Abrollen (3) der Greifmittel (2) am Fahrzeugreifen (4), mindestens eine Druckrolle (5) und mindestens zwei seitliche Druckköpfe (10, 11) aufweist, wobei die Abrollmittel mindestens eine Positionierrolle (8) aufweisen, die sich alle oberhalb des Reifens (4) befinden.

11. Einrichtung nach Anspruch 10, **dadurch gekennzeichnet, dass** der erste seitliche Druckkopf (10) mit dem Anfangsabschnitt der Greifmittel (2) verbunden sind.

12. Einrichtung nach Anspruch 10, **dadurch gekennzeichnet, dass** sich die seitlichen Druckköpfe (10, 11) möglichst nahe an der Vertikalen des Reifens (4) befinden.

13. Einrichtung nach Anspruch 10, **dadurch gekennzeichnet, dass** der Behälter (1) Mittel (14) zu dessen Verschiebung in Richtung des Reifens (4) umfasst.

14. Einrichtung nach Anspruch 10, **dadurch gekennzeichnet, dass** sie mindestens eine Reinigungsbürste (13) für den Reifen (4) aufweist.

15. Einrichtung nach Anspruch 10, **dadurch gekennzeichnet, dass** sie einen oder mehrere Luftabgabevorrichtungen (105) für die Reinigung des Reifens (4) aufweist.

16. Einrichtung nach Anspruch 10, **dadurch gekennzeichnet, dass** der Behälter (1) abnehmbar ist.

17. Einrichtung nach Anspruch 10, **dadurch gekennzeichnet, dass** sie Mittel zur Rückstellung der Greifmittel (2) umfasst.

18. Einrichtung nach Anspruch 17, **dadurch gekennzeichnet, dass** die Rückstellungsmittel Mittel zur Aufnahme des Einhakelements bzw. des Abschnitts (101) zusammen mit Mitteln (106, 107) zur Rückstellung des ersten und zweiten Druckkopfs (10, 11) umfasst.

19. Einrichtung nach Anspruch 10, **dadurch gekennzeichnet, dass** die Greifmittel (2) ein flexibles elastisches Element aufweisen, das über Vorsprünge (6), die in das Reifenprofil (7) passen, am Reifen (4) befestigt sind, und dessen Außenfläche Greifelemente (9) für Schnee oder Eis umfasst.

20. Einrichtung nach Anspruch 19, **dadurch gekennzeichnet, dass** die Greifmittel (2) am Anfang und Ende derselben Hohlräume (102, 103) zur Positionierung des ersten bzw. zweiten seitlichen Kopfs (10, 11) aufweisen, wobei die Dicken dieser Hohlräume (102, 103) den Dicken der seitlichen Köpfe (10, 11) entsprechen.

21. Einrichtung nach Anspruch 19, **dadurch gekennzeichnet, dass** die Greifmittel (2) Mittel (16) in Form einer Umrandung und einer seitlichen Aufblasvorrichtung (12) umfassen.

22. Einrichtung nach Anspruch 19, **dadurch gekennzeichnet, dass** die Greifmittel (2) am Ende der Greifmittel (2) beim Abrollen einen Auffangbereich (101) umfassen.

## Revendications

1. Procédure pour l'installation d'un moyen d'accrochage sur neige ou glace sur le pneu d'un véhicule qui comprend un conteneur (1) fixé au véhicule, ledit conteneur (1) comporte un moyen d'accrochage (2) avec un moyen pour dérouler (3) ledit moyen d'accrochage (2) sur le pneu du véhicule (4), et au moins un rouleau presseur (5) **caractérisé en ce qu'**il comprend au moins deux têtes de pression latérales (10, 11), lesdits moyens de déroulement comprenant au moins un rouleau de positionnement (8), le tout situé sur un pneu (4) et du fait qu'il comprend les phases suivantes
• dans une première phase, le moyen d'accrochage (2), le rouleau presseur (5) et la tête de pression latérale (10) sont positionnés sur le pneu (4),
• dans une deuxième phase, le véhicule démarre et avance lentement vers l'avant et déroule le moyen d'accrochage (2) depuis le rouleau de positionnement (8) jusqu'à atteindre la fin, chevauchant ledit moyen d'accrochage (2),
• dans une troisième phase la tête de pression latérale (11) est installée pour fixer le moyen d'accrochage (2) au pneu (4),
• dans une quatrième phase, le rouleau de positionnement (8) et le rouleau presseur (5) reviennent à la position initiale.

2. Procédure conformément à la revendication 1, où ledit moyen d'accrochage (2) sous forme d'élément élastique flexible, sa surface externe comprenant des éléments d'accrochage (9) pour neige ou glace, est fixé au pneu par des protubérances (6) qui s'ajuste à la bande de roulement (7).

3. Procédure conformément à la revendication 2, **caractérisée en ce que** le moyen d'accrochage (2) comporte des cavités (102, 103) où, au début et à la fin de ces cavités pour le positionnement de la première et de la deuxième tête latérale (10, 11) respectivement, les épaisseurs de ces cavités (102, 103) correspondent aux épaisseurs desdites têtes latérales (10, 11).

4. Procédure conformément à la revendication 2 ou 3, **caractérisée en ce que** le moyen d'accrochage (2) comporte un moyen, en forme de jupe (16) et de renflement latéral (12).

5. Procédure conformément à la revendication 1, 2 ou 3, **caractérisée en ce que** la première tête de pression latérale (10) est unie à la section initiale du moyen d'accrochage (2).

6. Procédure conformément à la revendication 1, **caractérisée en ce que** les têtes de pression latérales (10, 11) se trouvent le plus près possible de la verticale du pneu (4).

7. Procédure conformément à la revendication 1, **caractérisée en ce que**, avant la première phase, le conteneur (1) avance vers le pneu (4).

8. Procédure conformément à une ou plus d'une revendication, **caractérisée en ce qu'**elle comporte une cinquième phase pour la récupération du moyen d'accrochage (2).

9. Procédure conformément à la revendication 1, **caractérisée en ce que** ladite phase de récupération comporte le dégagement de la deuxième tête de pression latérale (11) et **en ce que** la zone ou l'élément de crochet (101) au bout du moyen d'accrochage (2) est relié au rouleau de positionnement (8) qui, quand le véhicule fait marche arrière, le rouleau de positionnement (8) tourne dans le sens contraire au dévidage et le moyen d'accrochage (2) est enroulé.

10. Dispositif d'installation du moyen d'accrochage pour neige ou glace sur le pneu d'un véhicule conformément à la procédure précédente, **caractérisé en ce qu'**il comporte un conteneur (1) fixé au véhicule, ledit conteneur (1) comporte un moyen d'accrochage (2), avec un moyen pour dérouler (3) ledit moyen d'accrochage (2) sur le pneu du véhicule (4), au moins un rouleau de pression (5) et au moins deux têtes de pression latérales (10, 11), ledit moyen de déroulement comprenant au moins un rouleau de positionnement (8), tous situés sur le pneu (4).

11. Dispositif conformément à la revendication 10, **caractérisé en ce que** la première tête de pression latérale (10) est unie à la section initiale du moyen d'accrochage (2).

12. Dispositif conformément à la revendication 10, **caractérisé en ce que** les têtes de pression latérales (10, 11) sont situées le plus près possible de la verticale du pneu (4).

13. Dispositif conformément à la revendication 10, **caractérisé en ce que** le conteneur (1) comporte un moyen (14) pour avancer vers le pneu (4).

14. Dispositif conformément à la revendication 10, **caractérisé en ce qu'**il comporte au moins une brosse de nettoyage (13) pour le pneu (4).

15. Dispositif conformément à la revendication 10, **caractérisé en ce qu'**il comporte un, ou plus d'un, distributeur d'air (105) pour le nettoyage du pneu (4).

16. Dispositif conformément à la revendication 10, **caractérisé en ce que** le conteneur (1) est amovible.

17. Dispositif conformément à la revendication 10, **caractérisé en ce qu'**il comporte un moyen de récupération du moyen d'accrochage (2).

18. Dispositif conformément à la revendication 17, **caractérisé en ce que** ledit moyen de récupération comporte un moyen pour recueillir une zone ou un élément de crochet (101), ainsi qu'un moyen (106, 107) pour récupérer la première et la deuxième tête de pression latérale (10, 11).

19. Dispositif conformément à la revendication 10, **caractérisé en ce que** le moyen d'accrochage (2) comporte un élément élastique flexible fixé au pneu (4) par des protubérances (6) qui s'ajustent à la bande de roulement (7) du pneu (4) et sa surface extérieure comporte des éléments d'accrochage (9) pour neige ou glace.

20. Dispositif conformément à la revendication 19, **caractérisé en ce que** ledit moyen d'accrochage (2) comporte des cavités (102, 103) au début et à la fin de celui-ci pour le positionnement de la première et de la deuxième tête de pression latérale (10, 11) respectivement, l'épaisseur de ces cavités (102, 103) correspondant aux épaisseurs des têtes latérales (10, 11).

21. Dispositif conformément à la revendication 19, **caractérisé en ce que** ledit moyen d'accrochage (2) comporte un moyen (16) en forme de jupe et de renfort latéral (12).

22. Dispositif conformément à la revendication 19, **caractérisé en ce que** ledit moyen d'accrochage (2) comporte une zone de blocage (101) à la fin du moyen d'accrochage (2) quand ce dernier est déroulé.
